# EUROPEAN PATENT APPLICATION

(11) **EP 2 124 158 A1**
(43) Date of publication of application: **25.11.2009**
(21) Application number: 08700610.2
(22) Date of filing: 08.01.2008
(51) Int. Cl.: G06F 17/30

(54) **MUSIC SEARCH METHOD BASED ON QUERYING MUSICAL PIECE INFORMATION**

(30) Priority: 17.01.2007 CN 200710036538
(71) Applicant: Shanghai Yee Networks Co., Ltd., Shanghai 200000 (CN)
(72) Inventor: ZHANG, Wenqi, Shanghai 200000 (CN); FAN, Di, Shanghai 200000 (CN); CHENG, Weimin, Shanghai 200000 (CN)
(74) Representative: Tofting, Arild
(86) International application number: PCT/CN2008/000050
(87) International publication number: WO 2008/089647

(57) **Abstract**

A method for searching music based on music segment information inquiry comprises: a) analyzing certain music or song to obtain music rhythm and note information of any segment, and converting it to digital data as a basis for searching the music or the song after quantification; b) storing indexes of any segment of music rhythm and note information for the music or song in database; c) take the inquiry requirement as a basis for searching and comparing to find the required music or song.

The advantage of the invention is to search music via a segment of a music melody or song without knowing text information like music name or singer, which extremely extends the flexibility of music searching, and therefore the subscriber' s requirements for music searching are satisfied and fuzzy searching is achieved. When searching and comparing, the matching degree between music rhythm and note information in a segment and in index database may be configured to improve searching hit-the-target rate or searching accuracy.

## Description

### Field of the invention

The present invention is based on a rapid searching method on music to obtain specific music rhythm and note melody information via a simple method of sampling music segment, and to search quickly via comparing corresponding music data, thereby to find the required music content.

### Background of the invention

The spread of digitalized music is becoming a popular trend. People are beginning to be accustomed to obtain various abundant music contents from websites. The current music searching and inquiring method basically takes song name and singer' s name as searching term; however, there is a case like this: you hear a wonderful melody on the road or in the mall, but you catch only a segment without knowing the song name, the singer or other information; you may want to look for the song yet there is no way to find it. How to find your favorite music via a simple music melody or a segment of a song is becoming a new challenge of music searching.

### Summary of the Invention

In order to solve the above technical problem, the present invention provides a method for searching music which is based on music segment information inquiry. The method includes:
a) analyzing certain music or song to obtain music rhythm and note information of any segment, and converting it to digital signal as a basis for searching the music or the song;
b) pre-processing all the music or songs in the music or song database with the same digital processing method to be music rhythm and note information represented by digital signals so as to constitute an index database for searching;
c) taking music rhythm and note information of any known segment of certain music or song which needs to be inquired as a basis, searching and comparing with index database of music rhythm and note information in the music or song database, judging by matching degree and enumerating those in greatest match for subscriber to choose until the required music or song is found.

Analyzing music or song to obtain music rhythm and note information of any segment comprises sampling audio frequency of the music or song to obtain a group of note pulses including tone and rhythm features, to obtain the frequency of corresponding note by filtering with a group of digital filters after quantification, to obtain music rhythm and note information on a segment of the music or song after being further superimposed by pulse superimposer.

In order to search music rapidly via a simple music melody or song segment, the present invention analyzes and identifies a music melody or song segment by adopting music rhythm and note identification technology to obtain the corresponding music rhythm and note information included in the segment. Furthermore, the present invention also takes it as music searching basis to search online by comparing the corresponding music rhythm and note information to find the wanted music quickly.

The advantage of the invention is to search music via a segment of a music melody or song without knowing text information like song name or singer, which extremely extends the flexibility of music searching, and therefore the subscriber' s requirements for music searching is satisfied and fuzzy searching is achieved. When comparing with music or song database for searching, the comparison with pre-processed music rhythm and note information index database is only a comparison of digital data. Because the data quantity impropriated by music rhythm and note information is relatively small and computation quantity is also small when searching, high speed searching may be achieved. When comparing, the matching degree between music rhythm and note information in a segment and in index database may be configured to improve searching hit-the-target rate or searching accuracy.

### Brief Description of the Drawings

Fig.1 illustrates a circuit framework diagram of identifying the compared signals for online music inquiring and searching of the invention;
Fig.2 illustrates an embodiment of Fig.1;
Fig.3 illustrates the schematic diagram of music segment information stored in the music or song database.

### Detailed Description of Embodiments

Further description for the invention is made referring to the drawings.

In the invention, there is provided a method for searching music which is based on music segment information inquiry. The method may comprise:
a) analyzing certain music or song to obtain music rhythm and note information of any segment, and converting it to pulse string as a basis for searching the music or the song after quantification;
b) pre-processing all the music or songs in the music or song database with the same digital processing method to be music rhythm and note information represented by digital signals so as to constitute an index database for searching.
c) taking the music rhythm and note information of any known segment of the music or song which needs to be inquired as a basis, searching and comparing with index database of music rhythm and note information in the music or song database, judging by matching degree and enumerating those in greatest match for subscriber to choose until the required music or song is found.

Analyzing music or song to obtain music rhythm and note information of any segment comprises sampling audio frequency of the music or song to obtain a group of note pulses including tone and rhythm features, to obtain the frequency of corresponding note by filtering with a group of digital filters after quantification, to obtain music rhythm and note information on a segment of the music or song after being further superimposed by pulse superimposer.

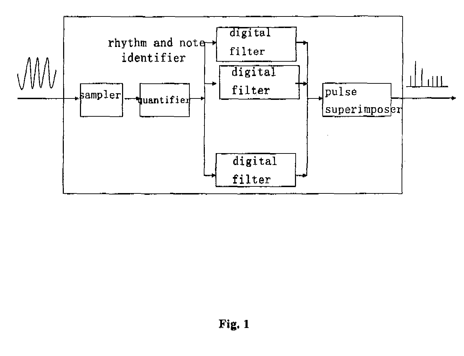

As illustrated in Fig.1, a music segment is inputted into music rhythm and note identifier to obtain corresponding pulses sequence of rhythm and note for music searching after analysis and identification.

In the structure of music rhythm and note identifier, music melody or song segment is sampled and analyzed firstly. The audio frequency pulse signal is obtained after sampling the audio frequency signal.

Digital spectrum signal is obtained after audio frequency pulse signal is quantified.

Then the digital spectrum signal is inputted into a series of digital filters. The principle is that all the music is regarded as to be constituted by seven notes in various tones and rhythms, and every note corresponds to a digital frequency in digital spectrum signal. According to frequency component of every sampling point, the corresponding rhythm and tone of the note may be identified via a specific digital filter. The rhythm component of various notes is obtained via a group of digital filters.

Then the rhythm component of all notes is pulse superimposed to obtain a data pulse string, which consists of the notes and corresponding rhythms, to correspond the digital identification signal of all music melody or song segment.

When searching and comparing data pulse comprising notes and corresponding rhythms, the required music and song may be obtained. For example, in the music database, all the music and songs are identified and analyzed beforehand to obtain notes and rhythm data groups corresponding to every music and song, and all the notes and rhythm data groups are compiled as an index database. When the music melody or song segment uploaded by subscriber is analyzed and identified, a data string comprised of notes and corresponding rhythms is obtained for searching in index database of notes and rhythms. The required music and song may be obtained quickly.

Considering the tolerability of identifying, several similar music and songs may be provided by database for subscriber' s reference and let subscriber to try to listen to a segment to identify if these are the music and songs that he wants.

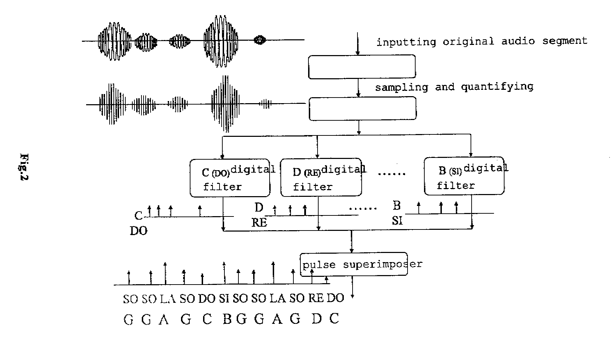

The judging process is described as following as an example. As shown in Fig.2, the original signal is a voice signal inputted analogously, which represents a continuous profile of the voice as the first wave curve shown in Fig.2. It could be a music segment recorded by subscriber or a piece of song hummed to the speaker by subscriber. It is represented as continuous analog measure in original voice profile which may be comprehended as component signal of various frequencies in the direction of digital signal process.

Then the continuous enveloping line of the voice is inputted into music rhythm and note identifier, and digital signal process is performed to the continuous analog component.

The first step is sampling and quantification, i.e. to sample the continuous profile of the voice with specific frequency to obtain a series of pulse signals which are queued in line in time axis. In order to ensure the high fidelity of the sampling signals, the sampling frequency must meet a requirement of 44KHz or 48KHz generally. The voice frequency sensed by human ear is between 20 Hz to 20 kHz. The reliable retrievement and high fidelity of digital sampling signals are ensured when sampling frequency is two times as high as the voice frequency. Meanwhile, in order to quantify sound intensity of the pulse voice signals in a digital manner, to encode every pulse signal in a digital manner and to ensure the high fidelity of quantification, normally more than 16 bits are employed to quantify the code so as to ensure the reliability of quantification. After sampling and quantification, the original audio frequency wave is converted into a string of sampling pulse signals which represent the sound intensity which is called as digital audio frequency encoding as shown as the second pulse in Fig.2. The string of sampling pulse signals, in digital signal conversion procedure, is considered to be comprised of pulse component signal of various frequencies in digital spectrum, including various frequencies and harmonic component of various frequencies.

After obtaining the pulse signal which is sampled and quantified, the required frequency component needs to be obtained by filtering. Because the tones, DO RE MI FA SOL LA SI, which have already been defined in music world actually are corresponding to specific vibration frequencies which are denoted as C D E F G A B in music score, for example, the lower case a is specified as international standard note which vibrates 440 times per second. Since certain quantitative relation exists between tones of tone series, for instance, if a note is one time higher than another (also called one alt octave), its frequency must be one time higher than that one; if a note is one time lower than another (also called one octave lower), its frequency must be one time lower than that one. When the pitch of the standard note is specified, the pitches of other notes are specified consequently. Having this standard, there is a basis for sound definition when producing musical instruments, playing instruments and singing.

In this way, we will know that different music notes correspond to specific frequencies. We will know the corresponding note by judging its frequency value as shown in Table 1 and Table 2, which show the correspondence between notes and their vibration frequency. The range of music notes used in music is from the lowest note, 16 times vibration per second, to the highest note, 4186 times vibration per second with total of 97 notes. Currently the most advanced piano with the most extensive notes may play 88 notes of them. For physiological limitation of human being, the sounded notes are only a small part of the whole notes range.

After obtaining a series of pulse signals which are sampled, quantified and encoded, the digital signal process method may be used to separate the corresponding vibration frequency as shown in Fig.2. The series of pulse signals obtained are inputted into a series of parallel digital filters, each corresponding to a vibration frequency of a special note, for instance, the digital filter for C (DO) only allows the signals with the frequency component of 262Hz to pass by while the signals with other frequency components are filtered out. When a string of pulse signal passes the Do digital filter, the corresponding pulse component of 262Hz in time axis may be obtained. It represents the position of the corresponding DO in music score. Similarly, a series of position pulse waves corresponding to various notes in scale in time axis are obtained as the third group of pulse wave, as shown in Fig.2.

Then all the obtained note position pulse waves are superimposed in time axis by pulse superimposer to obtain a group of integrated pulse waves including all the notes what we know as score, i.e. SO SO LA SO DO SI SO SO LA SO RE DO. It may also be denoted as G G A G C B G G A G D C in a standard way. Then an analog voice music segment is sampled and denoted as music score information represented by corresponding notes.

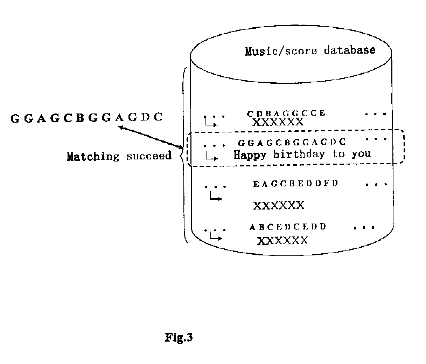

In order to search the whole music content according to the obtained score information segment, the music score information segment needs to be compared with those in music score database. For rapid searching, the music in music database is pre-processed to be represented in form of music score method of score. Then the score information segment is compared with the score record in database as shown in Fig.3. The most similar music score with the score segment may be found based on the similarity of music information segment. For example, G G A G C B G G A G D C is known by us as the familiar " Happy Birthday to you" after searching.

In this way, inquiring corresponding whole music content via a music segment is implemented. The method may also be broadly applied for entertainment and education field, e.g. during karaoke, there is no need to order a song by text information like song name and singer, instead, by singing a little bit of the familiar song, the computer system may automatically search the song you want to order. Another example is that you may record a music segment and send it to mobile website when you want to download a wonderful piece of music as ringing tone for your cell phone without knowing its name. The ringing tone you want to download may be automatically found in the database. It may happen that there is a mistake in the singing, so several similar music songs may be found and listed for subscriber to choose.

**Table 2**

| Note | Frequency Numbaring | | | Note | Frequency | Numbering | | Note | Frequency | Numbering |
|---|---|---|---|---|---|---|---|---|---|---|
| C-2 | | 0 | | A-1 | | 21 | | F1 | 87.31 | 41 |
| C#-2 | | 1 | | A#-1 | | 22 | | F#1 | 92.5 | 42 |
| D-2 | | 2 | | B-1 | | 23 | | G1 | 98 | 43 |
| D#-2 | | 3 | | C-0 | | 24 | | G#1 | 103.83 | 44 |
| E-2 | | 4 | | C#0 | 34.65 | 25 | | A1 | 110 | 45 |
| F-2 | | 5 | | D0 | 36.71 | 26 | | A#1 | 116.54 | 46 |
| F#-2 | | 6 | | D#0 | 38.89 | 27 | | B1 | 123.47 | 47 |
| G-2 | | 7 | | E0 | 41.2 | 28 | | C2 | 130.81 | 48 |
| G#-2 | | 8 | | F0 | 43.65 | 29 | | C#2 | 138.59 | 49 |
| A-2 | | 9 | | F#0 | 46.25 | 30 | | D2 | 146.83 | 50 |
| A#-2 | | 10 | | G0 | 49 | 31 | | D#2 | 155.56 | 51 |
| B2 | | 11 | | G#0 | 51.91 | 32 | | E2 | 164.81 | 52 |
| C-1 | | 12 | | A0 | 55 | 33 | | F2 | 174.61 | 53 |
| C#-1 | | 13 | | A#0 | 58.27 | 34 | | F#2 | 185 | 54 |
| D-1 | | 14 | | B0 | 61.73 | 35 | | G2 | 196 | 55 |
| D#-1 | | 15 | | C1 | 65.41 | 36 | | G#2 | 207.65 | 56 |
| E-1 | | 16 | | C#1 | 69.3 | 37 | | A2 | 220 | 57 |
| F-1 | | 17 | | D1 | 73.42 | 38 | | A#2 | 233.08 | 58 |
| F#-1 | | 18 | | D#1 | 77.78 | 39 | | B2 | 246.94 | 59 |
| G-1 | | 19 | | E1 | 82.41 | 40 | | C3 | 261.63 | 60 |
| G#-1 | | 20 | | | | | | | | |

## Claims

1. A music searching method based on music segment information inquiry, comprising:
a) analyzing certain music or song to obtain music rhythm and note information of any segment, and converting it to digital data as a basis for searching the music or the song;
b) pre-processing all the music or songs in the music or songs database with the same digital processing method to be music rhythm and note information represented by digital signals so as to constitute an index database for searching.
c) taking the music rhythm and note information of any known segment of the music or song which needs to be inquired as a basis, searching and comparing with index database of music rhythm and note information in the music or song database, judging by matching degree and enumerating those in greatest match for subscriber to choose until the required music or song is found.

2. A music searching method based on music segment information inquiry according to claim 1, wherein analyzing music or song to obtain music rhythm and note information of any segment is to sample audio frequency of the music or song to obtain a group of note pulses including tone and rhythm features, to obtain the frequency of corresponding note by filtering with a group of digital filters after quantification, to obtain music rhythm and note information on a segment of the music or song after being further superimposed by pulse superimposer.
